(19) Europäisches Patentamt / European Patent Office / Office européen des brevets

(11) **EP 4 298 332 B1**

(12) **EUROPEAN PATENT SPECIFICATION**

(45) Date of publication and mention
of the grant of the patent:
**02.04.2025 Bulletin 2025/14**

(21) Application number: **21709456.4**

(22) Date of filing: **23.02.2021**

(51) International Patent Classification (IPC):
*F02D 41/34* (2006.01)    *F01L 1/047* (2006.01)
*G01M 15/12* (2006.01)    *F02D 41/22* (2006.01)

(52) Cooperative Patent Classification (CPC):
**F01L 1/047; F02D 41/22; G01M 7/025;
G01M 15/12;** F01L 2800/17; F01L 2800/18;
F01L 2820/042; F01L 2820/044; F02D 2250/28

(86) International application number:
**PCT/FI2021/050133**

(87) International publication number:
**WO 2022/180296 (01.09.2022 Gazette 2022/35)**

(54) **TORSIONAL VIBRATION MODEL**

TORSIONSSCHWINGUNGSMODELL

MODÈLE DE VIBRATION DE TORSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2024 Bulletin 2024/01**

(73) Proprietor: **Wärtsilä Finland Oy**
**65170 Vaasa (FI)**

(72) Inventors:
• **PESTELLI, Carlo**
**65170 Vaasa (FI)**

• **SUNDSTRÖM, Peter**
**65170 Vaasa (FI)**
• **DEGANO, Francesco**
**65170 Vaasa (FI)**
• **ALMERIGOGNA, Moreno**
**65170 Vaasa (FI)**

(74) Representative: **Boco IP Oy Ab**
**Kansakoulukatu 3**
**00100 Helsinki (FI)**

(56) References cited:
**EP-B1- 3 344 969      WO-A1-2012/009718
JP-A- H06 137 164      US-A1- 2020 064 227**

## Description

## Technical Field

The present invention relates to the field of monitoring and maintenance of mechanical systems and more specifically to methods for monitoring and determining the conditions of engines.

## Background

The maintenance schedules of engine components are often based on engine running hours and lack any indication of the actual wear and functionality of the components. Condition-based maintenance (CBM) is an improvement of this maintenance approach, in which maintenance schedules are based on the evaluation of the deviation from standard values using trends and statistical parameters (e.g. limits, thresholds based on experience). However, these parameters cannot be set without clear knowledge of the components and experience of previous failures.

WO 2012/009718 A1 discloses fault detection and response techniques using an operational signature generated based on sensor signals from sensors operatively coupled to an engine system.

EP 3344969 B1 discloses a piston engine and an arrangement for detecting a failure of a head gasket of the piston engine by monitoring pressure of cooling liquid and torsional vibrations of a crankshaft.

JPH06137164 A discloses a failure prediction device for an internal combustion engine. Values obtained from a plurality of sensors are compared to reference values to determine abnormality.

US2020/064227 A1 discloses a method for sensing damage of bearing of engine using a vibration signal.

## Summary

According to a first aspect of the invention, a computer-implemented method for estimating a condition of at least one engine component in a piston engine is provided in claim 1.

Estimating the condition of the at least one component may be done in real-time.

The method may comprise estimating the condition of more than one component.

The mechanical system may be an internal combustion engine, such as a four-stroke engine.

The sensor signals may include one or more of: internal combustion pressure, receiver air pressure, receiver air temperature, exhaust gas pressure, exhaust gas temperature, engine load and engine speed.

Calculating torsional vibration response of the at least one component may comprise calculating the torsional vibration response at multiple positions on the component. At least one of the positions on the component may be a position that is not directly connected to a sensor.

Inputting the calculated torsional vibration response of the at least one component into a cumulative damage model may comprise inputting the torsional vibration stress history of the at least one component into the cumulative damage model.

The cumulative damage model may comprise rainflow counting of the torsional vibration stress history in order to determine the cumulative number of cycles of stress at each of a plurality of stress levels and applying Miner's rule to the cumulative number of cycles of stress to calculate the cumulative damage.

The method may further comprise providing a maintenance request when the cumulative damage exceeds a first threshold.

The method may further comprise providing a warning or alarm when the cumulative damage exceeds a second threshold.

The method may further comprise estimating the residual lifetime of the at least one component based on the cumulative damage model.

The method may further comprise outputting the residual lifetime of the at least one component.

According to a second aspect of the invention, a system may be provided, the system comprising a processor configured to perform the method as described above.

According to a third aspect of the invention, a computer program may be provided, the computer program comprising instructions which, when the program is executed by a processor, causes a computer to perform the method described above.

According to a fourth aspect of the invention, a non-transitory computer readable medium is provided, the computer readable medium comprising instructions which, when the program is executed by a processor, causes a computer to perform the method described above.

Brief Description of the Drawings

Figure 1 shows an example of a mechanical system that may be monitored by the process of the present invention.

Figure 2 is a schematic drawing of the mechanical system of Figure 1.

Figure 3 shows a process of monitoring the condition of a mechanical system according to the present invention.

Figure 4 shows a system for monitoring the condition of a mechanical system according to the present invention

Detailed Description

The present invention solves the problems associated with running hours-based and conventional condition-based maintenance of an engine by using a torsional vibration model of the engine in order to accurately calculate the torsional vibration response of components within the engine based on real and simulated sensor data. The torsional vibration response is input into a cumulative damage model of the component, which may be used directly to indicate when maintenance is required (e.g. which the cumulative damage crosses a threshold) and alternatively, or additionally, may be used to estimate the residual lifetime of the component.

While the description of the invention herein is primarily in the context of engines, it will be appreciated that the invention itself is more general and can be applied to any mechanical system, being based on a torsional vibration model of that system.

A torsional vibration model is a numerical model created to simulate the torsional vibration of mechanical components - in the case of an engine, typically the crankshaft and connected components. More information regarding torsional vibration models and their use in engine design can be found, for example, in "A Handbook on Torsional Vibration", E. J. Nestorides, Cambridge University Press, 1958, ISBN 0521043263, 9780521043267. Torsional vibration models are produced during the design phase of engine development; however, following the design phase, the torsional vibrational model is generally no longer used. However, in the present invention, the torsional vibration model is advantageously used to determine the torsional vibration of engine components based on real-world sensor data while the engine is operating.

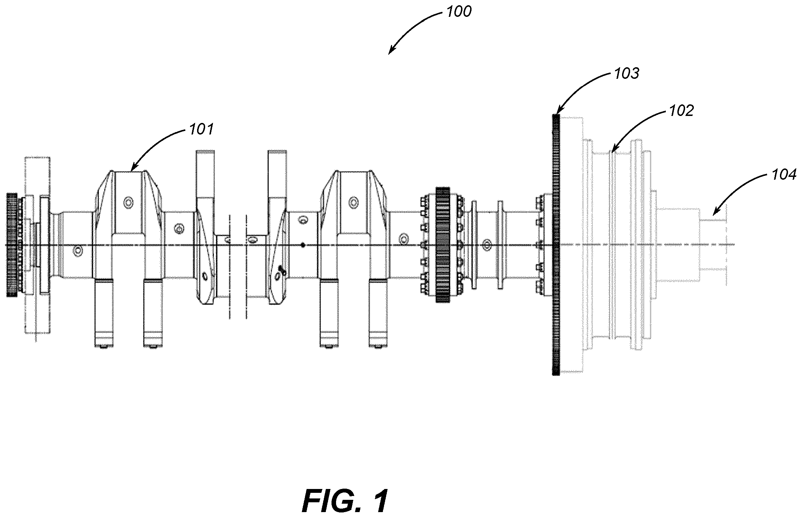

Figure 1 shows part of an exemplary engine 100, the condition of which may be monitored by the method of the present invention. The engine 100 includes a crankshaft 101, which is made up of a series of cranks that are connected to the pistons of the engine cylinder or cylinders. The crankshaft 101 converts the reciprocating motion of the piston to rotational motion. The crankshaft 101 may also be connected to a flywheel in order to reduce the effect of pulsation in the engine cylinder cycle, and to a vibration damper in order to reduce torsional vibration of the crankshaft 101. The engine 100 also includes a coupling 102, which couples the rotational motion of the crankshaft to another component outside of the engine, e.g. a generator. The coupling 102 is formed from rubber or a similar material, such as silicone, in order to account for misalignments that are the result of manufacturing tolerances and to reduce transmission of torsional vibration from the crankshaft to the component outside the engine. The energy dissipated in the reduction of transmission of torsional vibration is transformed in heat inside the coupling material during engine operation. Therefore, in addition to the torsional vibration stress itself, which may negatively affect the condition of the coupling 102, heating of the coupling 102 during engine operation can also negatively affect the condition of the coupling 102. Also shown in Figure 1 are a flywheel 103 and generator shaft 104, which transmits power from the engine 100 to further components, such as a propeller, vehicle drivetrain and/or electrical generator.

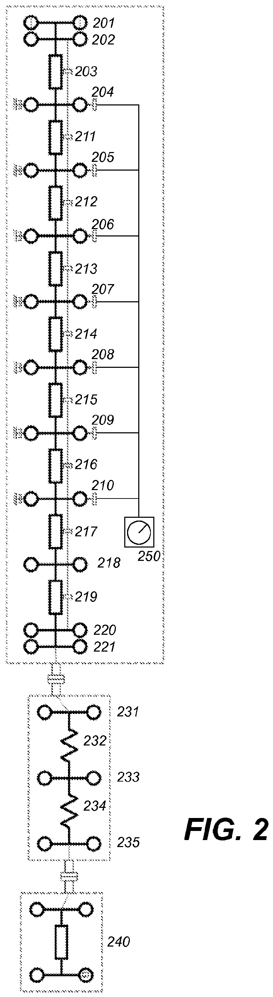

Figure 2 is an exemplary schematic drawing of the torsional vibration model of engine 100 shown in Figure 1. Elements 201-220 correspond to the crankshaft 101 and engine components (such as engine cylinders), element 221 corresponding to the flange/flywheel 103, and elements 231-235 correspond to the coupling 102. The individual numbered elements shown in Figure 2 are as follows:

| | |
|---|---|
| **201** | The inertia of the inner and outer ring of the torsional vibration damper. |
| **202** | The inertia of the free end flange of the engine and all the auxiliary installed e.g. on pump cover (water and/or oil pumps) taking motion from the crankshaft. |
| **203** | The stiffness of the shaft between the free end flange and the final cylinder. |
| **204** - **210** | The inertia of the cylinders (for a 7 cylinders in-line engine) |
| **210** - **215** | The stiffness of the crank between cylinders. |
| **217** | The stiffness of the shaft between the first cylinder and the gear |
| **218** | The inertia of the intermediate gear + camshaft gears and all the fuel pumps and auxiliary connected to the camshaft. |
| **219** | The stiffness of the shaft between the gear and the flywheel |
| **220, 221** | The inertia of the driving end flange and flywheel |
| **231** | The inertia of the coupling Mass connected to the Flywheel |
| **232** | The stiffness of the first flexible element of the coupling (e.g. rubber) |
| **233** | The inertia of the intermediate coupling mass |
| **234** | The stiffness of the second flexible element of the coupling (e.g. rubber) |
| **235** | The inertia of the coupling mass connected |

to the output shaft, e.g. generator shaft

**240**      Output, e.g. generator

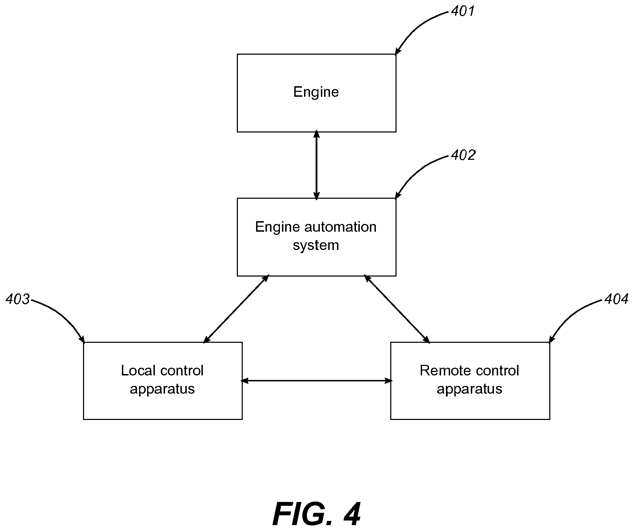

**250**      Engine automation system, as described in more detail below with respect to Figure 4.

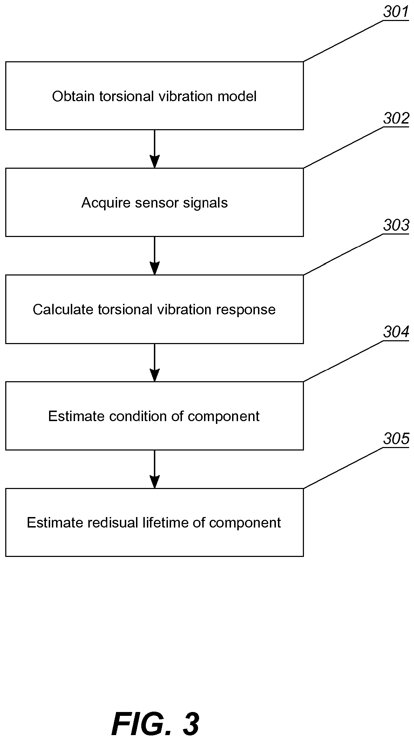

Figure 3 shows a method for estimating the condition of at least one mechanical component in a mechanical system, such as an engine. The at least one mechanical component may be the crankshaft 101 or the coupling 102, or the method may be used to estimate the condition of both the crankshaft and coupling 102 at the same time, for example. The method is performed on a computer and is implemented as a software programme that runs on the computer. The software, and the computer, may interact with other components external to the computer, such as sensors or other input devices, and output devices such as loudspeakers, displays or alarms.

At step 301, the torsional vibration model is obtained. The model may be obtained from a memory of the computer, or may be obtained over a network connection from another computer, for example. As explained above, the torsional vibration model is a model of the torsional vibration properties of the at least one component whose condition is being estimated. The torsional vibration model takes as input engine automation signals, such as the internal cylinder pressure of each cylinder, engine speed, engine air pressure, engine temperature, receiver air pressure, receiver temperature, exhaust gas temperature and exhaust gas pressure. The torsional vibration model may take any combination of these signals as inputs. The torsional vibration model outputs the torsional vibration stress of the component, of sub-sections of the component, or at different points within the component. Where the component is the crankshaft 101, the torsional vibration model is used to determine the torsional vibration stress at different points along the crankshaft, including at positions where it is impossible to place sensors to directly measure the state and condition of the crankshaft. Where the component is the coupling 102, the torsional vibration model may also output the torsional vibration stress, along with the angular deflection, vibratory torque, power loss and/or temperature of the coupling 102. Any combination of the outputs lists above may be produced by the torsional vibration model.

At step 302, sensor signals are acquired from sensors installed on or otherwise connected to or in communication with the mechanical system. The sensors from which signals are acquired include those suitable for measuring the torsional vibration model input models mentioned above, i.e. the internal cylinder pressure of each cylinder, engine speed, engine air pressure, engine temperature, receiver air pressure, receiver temperature, exhaust gas temperature and/or exhaust gas pressure. Any combination of the sensors may be provided and used in the system to provide the required sensor signals.

At step 303, the torsional vibration response of the component is calculated based on the torsional vibration model and the acquired sensor signals. In this context, the term "torsional vibration response" means any of the quantities listed above which depend on or are related to the torsional vibration of the system and may be provided as outputs of the model, i.e. torsional vibration stress, angular deflection, vibratory torque, power loss and/or temperature of the component. The torsional vibration response calculated from the model may include any combination of these quantities. The torsional vibration model can therefore be considered to produce simulated sensor signals relating to these torsional vibration response quantities at positions or on components that are impossible to install sensors on.

At step 304, the torsional vibration response - i.e. the simulated sensor signals - are used to estimate the condition of the component. A cumulative damage model is used to estimate the condition of the component. For torsional vibration stress, the stress time history, i.e. the calculated torsional vibration stress over time, is analysed using the rainflow-counting algorithm to identify torsional vibration stress cycles of the component. More information about rainflow-counting can be found in Endo, Tatsuo; Mitsunaga, Koichi; Takahashi, Kiyohum; Kobayashi, Kakuichi; Matsuishi, Masanori (1974); "Damage evaluation of metals for random or varying loading-three aspects of rain flow method"; Mechanical Behavior of Materials; 1: 371-380. Where the component is the crankshaft 101, this analysis may be performed at a single location on the crankshaft 101 (e.g. a stress hotspot or other location known to be subject to the large stress) or at multiple locations on the crankshaft 101. This provides a breakdown of the number of cycles of stress at different stress intervals. The cumulative damage is then calculated using Miner's rule, which states that the damage $D$, is given by the following equation:

$$D = \sum_i \frac{n_i}{N_i}$$

where $n_i$ is the number of cycles accumulated at a given stress interval $S_i$ and $N_i$ is the number of cycles at the given stress interval $S_i$ at which the component fails. The number $N_i$ may be calculated experimentally, e.g. based on a S-N curve, which plots the cyclic stress $S$ against the cycles to failure $N$. When the damage $D$ equals 1, failure of the component is indicated.

Where the estimation of the condition of the component is done in real-time, the number of cycles of stress at each interval are updated in real-time based on the output of the torsional vibration model, which itself receives input from the sensors in real time. The cumulative damage $D$, calculated according to the equation above, is then updated based on the updated number of stress cycles.

When the cumulative damage D exceeds a threshold, a warning may be provided, e.g. on a display in a GUI associated with the condition monitoring process, indicating that the component may need to be serviced or replaced soon. If the cumulative damage exceeds a second, higher threshold, an alarm, e.g. an audio and/or visual alarm, may be provided indicating that failure of the component is imminent.

Where the component is the coupling 102, the following method may be followed:

1. At time step t, the angular deflection of the coupling 102 is calculated based on the torsional vibration model.

The angular deflection of the coupling 102 relates to the torsional vibration according to the following equation:

$$[J]\{\ddot{\theta}\} + [C]\{\dot{\theta}\} + [K]\{\theta\} = \{T\}$$

where [J] is the inertia matrix, [C] is the damping matrix, [K] is the stiffness matrix, $\{\ddot{\theta}\}$, $\{\dot{\theta}\}$, $\{\theta\}$ are angular acceleration, angular velocity and angular deflection vectors respectively, and {T} is the vibratory torque vector.

The equations of motion are linear if the elements of matrices J, C and K are constant. Linearity of the equations of motion is required in order for superposition to be applied. In order to linearize the dynamic stiffness k and damping c (i.e. the elements of matrices K and C) of an elastic coupling the following expressions are used:

$$k = k_T x_\omega x_t x_a$$

$$c = c_T y_\omega y_t y_a$$

$k_T$ is the static stiffness, which is function of the mean torque transferred by the coupling and can be obtained by interpolation of the characteristic defined for each coupling element per specific coupling operating condition.

$x_\omega$ is the frequency correction and can be considered to be piecewise function where the intermediate values can be obtained by interpolation.

$x_t$ is the temperature correction, and $x_a$ is the amplitude correction. These are linear functions defined by sets of points.

The static damping $c_T$, frequency correction $y_\omega$, temperature correction $y_t$ and amplitude correction $y_a$ are functions as described above with respect to the static stiffness and its associated correction factors. These functions are derived from vibration modelling of the components across different operating conditions.

Using the vibratory torque vector {T} that is output from the torsional vibrational model, the equation above can be solved for the angular deflection {θ}.

2. The torque at the coupling 102 at time step t is calculated based on the calculated angular deflection of the rubber coupling 102, coupling stiffness at time step t, which is a function of the temperature of the coupling at time step t and the coupling damping at time step t.

3. A new temperature of the coupling at time step t + Δt (where Δt is the time step) is calculated based on the power loss at the coupling 102 at time step t, which is in turn based on the torque at the coupling 102 at time t. The temperature at time t + Δt is given by the following equation:

$$T_{t+\Delta t} = T_t + A_0 E_{diss}$$

where $A_0$ is the thermal coefficient specific and $E_{diss}$ is the energy dissipation due to damping of the elastic element.

4. The torsional vibration model is updated with the coupling characteristics of the coupling 102 at time t + Δt, i.e. the coupling damping and coupling stiffness. Specifically, the values of the correction factors $x_\omega$, $x_t$, $x_a$, $y_\omega$, $y_t$, $y_a$ described above are updated based on the calculated torque and temperature at time t + Δt.

The steps above are then repeated at subsequent time steps while the engine is in operation in order to monitor the state and condition of the coupling over time. The steps above can be performed in real-time as new sensor data is acquired for the torsional vibration model and as new temperatures for the rubber coupling are calculated.

A convergence criterion is set on temperature difference between adjacent time steps (or alternatively on dissipation energy) which define a maximum temperature difference δ between time steps. The maximum temperature difference may be, for example, 0.5 C. The convergence criterion ensures stability of the model. Furthermore, since the calculation process describe above is an iterative process, the convergence ensures that the process passes to the next step with an acceptable and accurate calculation precision.

If the calculated temperature difference exceeds the convergence criterion, the calculation continues the iterations as described above until the convergence criterion is satisfied.

The steps above are then repeated at subsequent engine cycle while the engine is in operation in order to monitor the state and condition of the coupling over time. The steps above can be performed in real-time as new sensor data is acquired for the torsional vibration model and as new temperatures for the rubber coupling are calculated.

In addition, a monitoring system alarm and warning may be implemented based on the temperature of the coupling. For example, the maximum permissible coupling core temperature is 110°C for natural rubber and 150°C for silicone.

Other advanced control can be implemented; for example, the temperature increment per hour can be monitored and it should be almost constant in steady state condition. In the event of a quickly increasing temperature, a warning alarm is displayed. For example, a warning may be issued if $\varDelta Temp > 1\ °C/h.$

At an optional step 305, the residual lifetime of the engine component or components is calculated. Residual lifetime may be calculated as described in Wortberg, Johannes & Mistler, M.. (2017). Lifetime prediction with nonlinear damage accumulation based on material stressing part I: Introduction of a general Procedure. KGK Kautschuk Gummi Kunststoffe. 70. 25-29.

In general, the steps of the method described above may be performed in real-time in order to maintain an accurate model of the condition and damage of the components. As such, a "digital twin" of the engine may be maintained in the memory of the computer.

Figure 4 shows a system for monitoring the condition of a mechanical system according to the present invention. Engine 301 is the engine described above with respect to Figure 1 and monitored by the method described with respect to and shown in Figure 3. The engine may be the engine of a marine vessel or power plant, for example.

The engine 401 is monitored and controlled by engine automation system 402 (e.g. engine automation system 250 shown in Figure 2). Engine automation system 401 may be an automation system such as a UNIC engine automation system, which is a modular, embedded control system for control and monitoring of diesel and gas engines developed by Wärtsilä®. A UNIC system facilitates fundamental engine safety functions, engine monitoring and control of fuel injection and ignition functionalities. The system also includes start/stop logics and speed/load control. The engine automation system 401 gathers the necessary sensor data for the torsional vibration model described above. As such, the system may include a plurality of sensors located on or in engine 401.

The system also includes one or more of a local control apparatus 403 and a remote control apparatus 401. The method described above with respect to Figure 2 is preferably implemented as software on the local control apparatus 403 or remote control apparatus 404, taking advantage of the existing engine sensors that are part of the engine automation system. However, in some embodiments, the engine automation system 402 may not be present and instead the local control apparatus 403 or remote control apparatus 404 may be connected to other sensors that are part of the engine 401. The local control apparatus 403 and/or remote control apparatus 404 is configured to generate maintenance request once the residual lifetime of the engine component or calculated engine component damage exceeds a threshold. The remote control apparatus 404 may be connected directly to the engine automation system 402 via a network, such as the internet, or may instead connect to the local control apparatus 403, when both are provided.

In an embodiment, the local control apparatus 403 and/or remote control apparatus 404 is configured to generate maintenance request based on the residual lifetime of the engine component or calculated engine component damage combined with predicted operation schedule.

The predicted operation schedule may comprise, for example, forthcoming route information of future voyages of a marine vessel or predicted environmental information of a power plant utilising an engine as a backup power source for wind or solar, for example.

By combining the improved estimation of a component's condition and the predicted operation schedule, the service of the component may be further optimised. For a marine vessel, an optimal location, dock and time may be determined for the service, for example. For a power plant, an optimal time when there is forecasted wind and/or solar energy available, may be determined. Energy storages may be utilised for temporary backup and peak-shaving as well.

In an embodiment, residual lifetime of the engine component or calculated engine component damage may also be used for route planning of a marine vessel. In case the estimated condition of a component is above a threshold, the marine vessel routes may be optimised taking into consideration the component condition automatically by a control apparatus. Thus, the risk of component failure may be minimized by selecting optimal routes without causing too much load for certain components above threshold, for example.

## Claims

1. A computer-implemented method for estimating a condition of at least one engine component in a piston engine having a crankshaft converting reciprocating motion of pistons to rotational motion, wherein the at least one engine component comprises at least one of the crankshaft and crankshaft rubber couplings, the method comprising:

obtaining a torsional vibration model of the at least one engine component;

acquiring sensor signals from sensors installed on the piston engine;

calculating torsional vibration response of the at least one engine component based on the acquired sensor signals and the torsional vibration model, wherein the torsional vibration response means quantities which depend on or are related to the torsional vibration of the piston engine and are provided as outputs of the model, wherein the calculating torsional vibration response of the at least one engine component comprises i) calculating the torsional vibration response at multiple positions on the engine component, and wherein at least one of the positions on the engine component is a position that is not directly connected to a sensor, or ii) calculating torsional vibration response of at least one engine component on which sensors cannot be installed; and

estimating the condition of the at least one engine component by inputting the calculated torsional vibration response of the at least one engine component into a cumulative damage model of the engine component, wherein inputting the calculated torsional vibration response of the at least one engine component into the cumulative damage model comprises inputting a torsional vibration stress history of the engine component into the cumulative damage model.

2. The computer-implemented method of claim 1, where estimating the condition of the at least one engine component is done in real-time.

3. The computer-implemented method of any preceding claim, wherein the method comprises estimating the condition of more than one engine component.

4. The computer-implemented method of any preceding claim, wherein the piston engine is an internal combustion engine.

5. The computer-implemented method of claim 4, wherein the internal combustion engine is a four-stroke engine.

6. The computer-implemented method of claim 4 or 5, wherein the sensor signals include one or more of: internal combustion pressure, receiver air pressure, receiver air temperature, exhaust gas pressure, exhaust gas temperature, engine load and engine speed.

7. The computer-implemented method of claim 1, wherein the cumulative damage model comprises rainflow counting of the torsional vibration stress history in order to determine the cumulative number of cycles of stress at each of a plurality of stress levels and applying Miner's rule to the cumulative number of cycles of stress to calculate the cumulative damage.

8. The computer-implemented method of claim 7, wherein the method further comprises providing a maintenance request when the cumulative damage exceeds a first threshold.

9. The computer-implemented method of claim 7 or 8, wherein the method further comprises providing a warning or alarm when the cumulative damage exceeds a second threshold.

10. The computer-implemented method of any preceding claim, where the method further comprises estimating the residual lifetime of the at least one engine component based on the cumulative damage model.

11. The computer-implemented method of claim 10, wherein the method further comprises outputting the residual lifetime of the at least one engine component.

12. A system comprising sensors and a computer comprising a processor configured to perform the method of any of the preceding claims.

13. A computer program comprising instructions which, when the program is executed by a the computer of the system of claim 12, causes a computer to perform the method of any one of claims 1 to 11.

14. A computer readable medium comprising instructions which, when the program is executed by a the computer of the system of claim 12, causes a computer to perform the method of any one of claims 1 to 11.

**Patentansprüche**

1. Computer-implementiertes Verfahren zur Schätzung eines Zustands mindestens einer Maschinenkomponente in einer Hubkolbenmaschine mit einer Kurbelwelle, die eine Hubbewegung von Kolben in eine Drehbewegung umwandelt, wobei die mindestens eine Maschinenkomponente eine Kurbelwelle und/oder Kurbelwellengummikupplungen umfasst, wobei das Verfahren umfasst:

Erhalten eines Torsionsschwingungsmodells der mindestens einen Maschinenkomponente;
Erfassen von Sensorsignalen von an der Hubkolbenmaschine installierten Sensoren;
Berechnen einer Torsionsschwingungsantwort der mindestens einen Maschinenkomponente auf Grundlage der erfassten Sensorsignale und des Torsionsschwingungsmodells, wobei die Torsionsschwingungsantwort Größen bedeutet, die von der Torsionsschwingung der Hubkolbenmaschine abhängen oder auf diese bezogen sind und als Ausgaben des Modells bereitgestellt werden, wobei das Berechnen einer Torsionsschwingungsantwort der mindestens einen Maschinenkomponente umfasst: i) Berechnen der Torsionsschwingungsantwort an mehreren Positionen an der Maschinenkomponente, und wobei es sich bei mindestens einer der Positionen an der Maschinenkomponente um eine Position handelt, die nicht direkt mit einem Sensor verbunden ist, oder ii) Berechnen einer Torsionsschwingungsantwort mindestens einer Maschinenkomponente, an der keine Sensoren installiert werden können; und
Schätzen des Zustands der mindestens einen Maschinenkomponente durch Eingeben der berechneten Torsionsschwingungsantwort der mindestens einen Maschinenkomponente in ein Kumulativschadensmodell der Maschinenkomponente, wobei das Eingeben der berechneten Torsionsschwingungsantwort der mindestens einen Maschinenkomponente in das Kumulativschadensmodell umfasst: Eingeben eines Torsionsschwingungsbelastungsverlaufs der Maschinenkomponente in das Kumulativschadensmodell.

2.  Computer-implementiertes Verfahren nach Anspruch 1, wobei das Schätzen des Zustands der mindestens einen Maschinenkomponente in Echtzeit vorgenommen wird.

3.  Computer-implementiertes Verfahren nach einem vorhergehenden Anspruch, wobei das Verfahren den Zustand von mehr als einer Maschinenkomponente schätzt.

4.  Computer-implementiertes Verfahren nach einem vorhergehenden Anspruch, wobei die Hubkolbenmaschine eine Brennkraftmaschine ist.

5.  Computer-implementiertes Verfahren nach Anspruch 4, wobei die Brennkraftmaschine eine Viertaktmotor ist.

6.  Computer-implementiertes Verfahren nach Anspruch 4 oder 5, wobei die Sensorsignale eines oder mehreres von Folgendem umfassen: innerer Verbrennungsdruck, Eingangsluftdruck, Eingangslufttemperatur, Abgasdruck, Abgastemperatur, Motorlast und Motordrehzahl.

7.  Computer-implementiertes Verfahren nach Anspruch 1, wobei das Kumulativschadensmodell umfasst: Rainflow-Zählung des Torsionsschwingungsbelastungsverlaufs zum Bestimmen der kumulativen Anzahl von Belastungszyklen an jedem der mehreren Belastungsniveaus und Anwenden der Miner-Regel auf die kumulative Anzahl von Belastungszyklen zum Berechnen des kumulativen Schadens.

8.  Computer-implementiertes Verfahren nach Anspruch 7, wobei das Verfahren ferner umfasst: Bereitstellen einer Instandhaltungsanforderung, wenn der kumulative Schaden einen ersten Schwellenwert überschreitet.

9.  Computer-implementiertes Verfahren nach Anspruch 7 oder 8, wobei das Verfahren ferner umfasst: Bereitstellen einer Warnung oder eines Alarms, wenn der kumulative Schaden einen zweiten Schwellenwert überschreitet.

10. Computer-implementiertes Verfahren nach einem vorhergehenden Anspruch, wobei das Verfahren ferner umfasst: Schätzen der Restlebensdauer der mindestens einen Maschinenkomponente auf Grundlage des Kumulativschadensmodells.

11. Computer-implementiertes Verfahren nach Anspruch 10, wobei das Verfahren ferner umfasst: Ausgeben der Restlebensdauer der mindestens einen Maschinenkomponente.

12. System umfassend Sensoren und einen Computer, der einen Prozessor umfasst, der dazu ausgelegt ist, das Verfahren nach einem der vorhergehenden Ansprüche auszuführen.

13. Computerprogramm umfassend Anweisungen, die, wenn das Programm vom Computer des Systems nach Anspruch 12 ausgeführt wird, einen Computer dazu veranlassen, das Verfahren nach einem der Ansprüche 1 bis 11 auszuführen.

14. Computerlesbares Medium umfassend Anweisungen, die, wenn das Programm vom Computer des Systems nach Anspruch 12 ausgeführt wird, einen Computer dazu veranlassen, das Verfahren nach einem der Ansprüche 1 bis 11 auszuführen.

**Revendications**

1.  Procédé mis en œuvre par ordinateur pour estimer un état d'au moins un composant de moteur dans un moteur à piston comportant un vilebrequin transformant un mouvement alternatif de pistons en un mouvement rotatif, dans lequel ledit au moins un composant de moteur comprend au moins l'un parmi le vilebrequin et des accouplements de vilebrequin en caoutchouc, ledit procédé comprenant les étapes consistant à :

obtenir un modèle de vibration de torsion dudit au moins un composant de moteur;
acquérir des signaux de capteurs provenant de capteurs installés sur la machine à piston;
calculer une réponse de vibration de torsion dudit au moins un composant de moteur sur la base des signaux de capteur acquis et du modèle de vibration de torsion, ladite réponse de vibration de torsion signifiant des quantités qui dépendent de ou sont liées à la vibration de torsion de la machine à piston et sont fournies en tant que sorties du modèle, ledit calcul d'une réponse de vibration de torsion dudit au moins un composant de moteur comprenant l'étape de i) calculer la réponse de vibration de torsion en plusieurs positions sur le composant de moteur, et au moins l'une des positions sur le composant de moteur étant une position qui n'est pas directement reliée à un capteur, ou ii) calculer une réponse de vibration de torsion d'au moins un composant de moteur sur lequel des capteurs ne peuvent être installés; et
estimer l'état dudit au moins un composant de moteur en introduisant la réponse de vibration de torsion calculée dudit au moins un composant de moteur dans un modèle de dommage cumulatif du composant de machine, ladite introduction de la réponse de vibration de torsion calculée dudit au moins un composant de moteur dans le modèle de dommage cumulatif comprenant l'introduction d'une historique des charges de vibration de torsion du composant du moteur dans le modèle de dommage cumulatif.

2. Procédé mis en œuvre par ordinateur selon la revendication 1, dans lequel l'estimation de l'état dudit au moins un composant de moteur est réalisé en temps réel.

3. Procédé mis en œuvre par ordinateur selon une revendication précédente quelconque, dans lequel le procédé comprend l'étape consistant à estimer l'état de plus d'un composant de moteur.

4. Procédé mis en œuvre par ordinateur selon une revendication précédente quelconque, dans lequel le moteur à piston est un moteur à combustion interne.

5. Procédé mis en œuvre par ordinateur selon la revendication 4, dans lequel le moteur à combustion interne est un moteur à quatre temps.

6. Procédé mis en œuvre par ordinateur selon la revendication 4 ou 5, dans lequel les signaux de capteurs comprennent l'un ou plusieurs parmi : la pression de combustion interne, la pression de l'air reçu, la température de l'air reçu, la pression du gaz d'échappement, la température du gaz d'échappement, la charge du moteur et la vitesse du moteur.

7. Procédé mis en œuvre par ordinateur selon la revendication 1, dans lequel le modèle de dommage cumulatif comprend un comptage rainflow de l'historique des charges de vibration de torsion pour déterminer le nombre cumulatif des cycles de charge à chacun des plusieurs niveaux de charge et appliquer la règle de Miner au nombre cumulatif des cycles de charge pour calculer le dommage cumulatif.

8. Procédé mis en œuvre par ordinateur selon la revendication 7, dans lequel le procédé comprend également l'étape consistant à fournir une demande de maintenance lorsque le dommage cumulatif dépasse un premier seuil.

9. Procédé mis en œuvre par ordinateur selon la revendication 7 ou 8, dans lequel le procédé comprend également l'étape consistant à fournir un avertissement ou une alarme lorsque le dommage cumulatif dépasse un deuxième seuil.

10. Procédé mis en œuvre par ordinateur selon une revendication précédente quelconque, dans lequel le procédé comprend également l'étape consistant à estimer la durée de vie résiduelle dudit au moins un composant de moteur sur la base du modèle de dommage cumulatif.

11. Procédé mis en œuvre par ordinateur selon la revendication 10, dans lequel le procédé comprend également l'étape consistant à sortir la durée de vie résiduelle dudit au moins un composant de moteur.

12. Système comprenant des capteurs et un ordinateur comprenant un processeur configuré pour réaliser le procédé selon l'une des revendications précédentes.

13. Programme informatique comprenant des instructions qui, lorsque le programme est exécuté par l'ordinateur du système selon la revendication 12, amènent un ordinateur à réaliser le procédé selon l'une des revendications 1 à 11.

14. Support lisible par ordinateur comprenant des instructions qui, lorsque le programme est exécuté par l'ordinateur du système selon la revendication 12, amènent un ordinateur à réaliser le procédé selon l'une des revendications 1 à 11.

**FIG. 1**

**FIG. 2**

*301*

Obtain torsional vibration model

*302*

Acquire sensor signals

*303*

Calculate torsional vibration response

*304*

Estimate condition of component

*305*

Estimate redisual lifetime of component

**FIG. 3**

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012009718 A1
- EP 3344969 B1
- JP H06137164 A
- US 2020064227 A1

### Non-patent literature cited in the description

- **E. J. NESTORIDES**. A Handbook on Torsional Vibration. Cambridge University Press, 1958
- **ENDO, TATSUO** ; **MITSUNAGA, KOICHI** ; **TAKA-HASHI, KIYOHUM** ; **KOBAYASHI, KAKUICHI** ; **MATSUISHI, MASANORI**. Damage evaluation of metals for random or varying loading-three aspects of rain flow method. *Mechanical Behavior of Materials*, 1974, vol. 1, 371-380
- **WORTBERG** ; **JOHANNES** ; **MISTLER, M**. Lifetime prediction with nonlinear damage accumulation based on material stressing part I: Introduction of a general Procedure.. *KGK Kautschuk Gummi Kunststoffe*, 2017, vol. 70, 25-29